Europäisches Patentamt

European Patent Office

Office européen des brevets

(19)

(11) Veröffentlichungsnummer: **0 253 309 B1**

(12)

# EUROPÄISCHE PATENTSCHRIFT

(45) Veröffentlichungstag der Patentschrift: **08.01.92**

(51) Int. Cl.⁵: **G01F 3/22**, F16H 25/14

(21) Anmeldenummer: **87109917.2**

(22) Anmeldetag: **09.07.87**

(54) **Balgengaszähler.**

(30) Priorität: **12.07.86 DE 3623667**

(43) Veröffentlichungstag der Anmeldung:
**20.01.88 Patentblatt 88/03**

(45) Bekanntmachung des Hinweises auf die
Patenterteilung:
**08.01.92 Patentblatt 92/02**

(84) Benannte Vertragsstaaten:
**BE DE ES FR GB IT NL**

(56) Entgegenhaltungen:
**FR-A- 2 485 674**
**GB-A- 1 109 325**
**US-A- 1 823 953**

(73) Patentinhaber: **G. Kromschröder Aktiengesellschaft**
**Adolfstrasse 74 Postfach 2809**
**W-4500 Osnabrück(DE)**

(72) Erfinder: **Roese, Horst**
**Schillerstrasse 3**
**W-4512 Wallenhorst 1(DE)**
Erfinder: **Bertke, Heinrich**
**Theodor-Heuss-Strasse 5**
**W-4512 Wallenhorst 1(DE)**
Erfinder: **Brüggemann, Reinhard**
**Charlottenburger Strasse 20**
**W-4512 Wallenhorst 1(DE)**
Erfinder: **Hampel, Peter**
**Osterstrasse 18**
**W-4513 Belm(DE)**

(74) Vertreter: **Hosbach, Hans Ulrich**
**c/o Ruhrgas AG Huttropstrasse 60**
**W-4300 Essen 1(DE)**

**Beschreibung**

Die Erfindung betrifft einen Balgengaszähler mit zwei Kammern, die je eine bewegbare Wand enthalten, und einer gemeinsamen Welle, die zwei Exzentertriebe aufweist, von denen der eine mit den Gestängen der bewegbaren Wände und der andere mit den Gestängen von zwei Schiebern verbunden ist, welche die von den bewegbaren Wänden abgeteilten vier Teilkammern zyklisch mit einem Gaseinlaß und einem Gasauslaß verbinden, wobei die beiden Exzentertriebe derart gegeneinander winkelversetzt sind, daß die Schieber beim Füllhub bereits schließen, bevor die zugehörige Wand die Endlage erreicht hat. Ein derartiger Balgengaszähler ist aus der Praxis bekannt.

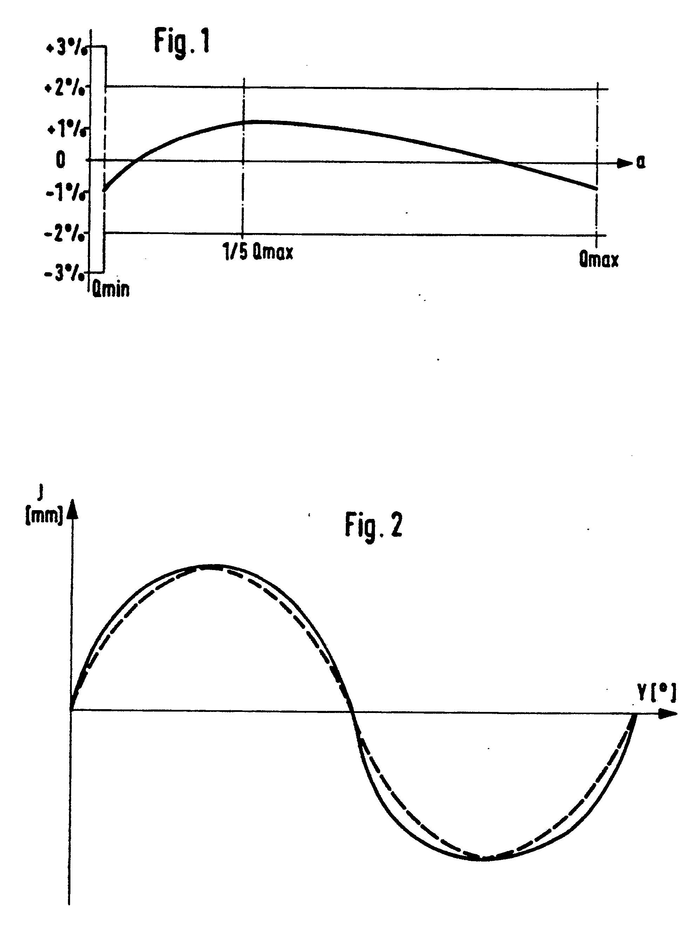

Das Voreilen der Schieber bedeutet, daß die Schieber beim Füllhub bereits schließen, bevor die zugehörigen bewegbare Wand die Endlage erreicht hat. Dies wirkt sich abflachend auf die Fehlerkurve des Balgengaszählers aus. Figur 1 stellt eine typische Wiedergabe einer Fehlerkurve dar. Die maximale Abweichung im positiven Bereich, in dem der gemessene Wert die tatsächlich gelieferte Menge übersteigt, liegt bei ca. 20 % der maximalen Liefermenge. Die maximale Abweichung im negativen Bereich liegt in der Regel bei der Mindestliefermenge, hat hier allerdings keine praktische Auswirkung. Im Bereich der maximalen Liefermenge fällt die Fehlerkurve ebenfalls in den negativen Bereich ab, was hier mit einer entsprechend erheblichen Auswirkung verbunden ist. Das Voreilen der Schieber bewirkt, daß die Fehlerkurve im oberen Liefermengenbereich angehoben und dementsprechend der Null-Linie angenähert wird.

Allerdings sind dem Maß der Voreilung Grenzen gesetzt, da eine ausreichende Füllung der Teilkammern gewährleistet werden muß.

Der Erfindung liegt die Aufgabe zugrunde, die Fehlerkurve des Balgengaszählers noch besser an die Null-Linie anzupassen.

Hierzu ist der erfindungsgemäße Balgengaszähler dadurch gekennzeichnet, daß der mit den Schiebern verbundene Exzentertrieb für jeden Schieber einen Kurvenscheibenantrieb aufweist, dessen auf der gemeinsamen Welle sitzende und in eine langgestreckte Öffnung des zugehörigen Gestänges eingreifende Kurvenscheibe derart von der Kreisform abweicht, daß die Öffnungscharakteristik der Schieber im Bereich des Null-Linien-Durchgangs möglichst eng an die Bewegungscharakteristik der Wände angepaßt ist.

Der Erfindung liegt die Erkenntnis zugrunde, daß einerseits die gemittelte Bewegungscharakteristik der bewegbaren Wände, die zum Teil aus einer Membran bestehen, keine reine Sinuskurve ist und daß andererseits der Effekt der Voreilung dann besonders günstig genutzt werden kann, wenn man die Öffnungscharakteristik der Schieber im Bereich des Null-Linien-Durchgangs (Fig. 2 u. 3) möglichst eng an die Bewegungscharakteristik der bewegbaren Wände anpaßt.

Figur 2 zeigt in gestrichelten Linien eine Sinuskurve und in ausgezogenen Linien die gemittelte Bewegungscharakteristik der bewegbaren Wände, die mit dem Volumenstrom korreliert. Die ausgezogene Linie ist im Bereich des Null-Linien-Durchgangs steiler als der Verlauf der Sinuskurve. Erfindungsgemäß werden die von der Kreisform abweichenden Kurvenscheiben so gestaltet, daß auch die Öffnungscharakteristik der Schieber im Bereich des Null-Linien-Durchgangs steiler als die für denselben Hub aufgetragene Sinuskurve verläuft.

Nach einem besonders vorteilhaften Merkmal der Erfindung sind die Kurvenscheibenantriebe als Rastgetriebe ausgebildet. Dies bewirkt, daß sich die Schieber sehr rasch in ihre Öffnungs- und Schließstellungen bewegen und relativ lange in diesen Stellungen verharren. Neben der erfindungsgemäß angestrebten Anpassung an die Bewegungscharakteristik der bewegbaren Wände ergibt sich auf diese Weise als wesentlicher weiterer Vorteil eine Absenkung des Druckverlustes des Balgengaszählers.

Vorzugsweise ist die langestreckte Öffnung jedes Kurvenscheibenantriebs in einem mit dem zugehörigen Schieber verbundenen Schwenkhebel vorgesehen. Auf diese Weise läßt sich die Bewegung der Kurvenscheibenantriebe besonders günstig in die Schieberbewegungen umsetzen.

Auch gestattet diese Konstruktion eine besonders vorteilhafte Weiterbildung nach der Erfindung, wonach die Bewegung der Schieber, in die die Schwenkhebel den Antrieb der Kurvenscheiben umsetzen, parallel zur Bewegungsrichtung der bewegbaren Wände verläuft. Auf die Weise läßt sich eine extrem kompakte Bauform erzielen.

Ferner können erfindungsgemäß die Schwenkhebel, bezogen auf den Symmetriepunkt der Kurvenscheiben, um 90° gegeneinander versetzt sein. Unter dieser Bedingung sind die Kurvenscheiben der Schieber-Antriebe um 180° gegeneinander versetzt. Dies bietet die vorteilhafte Möglichkeit, die Schwenkhebel nacheinander auf eine gemeinsame Welle aufzustecken.

Die Erfindung wird im folgenden anhand der beiliegenden Zeichnung näher erläutert. Die Zeichnung zeigt in:

Figur 1 eine typische Fehlerkurve eines Balgengaszählers;

Figur 2 die Bewegungscharakteristik der bewegbaren Wände;

Figur 3 die erfindungsgemäße Öffnungscharakteristik der Schieber;

Figur 4 einen Grundriß eines erfindungsgemäßen Balgengaszählers;

Figur 5 einen Grundriß der Welle nach Figur 4.

Die Figuren 1 und 2 wurden bereits in der Beschreibungseinleitung diskutiert.

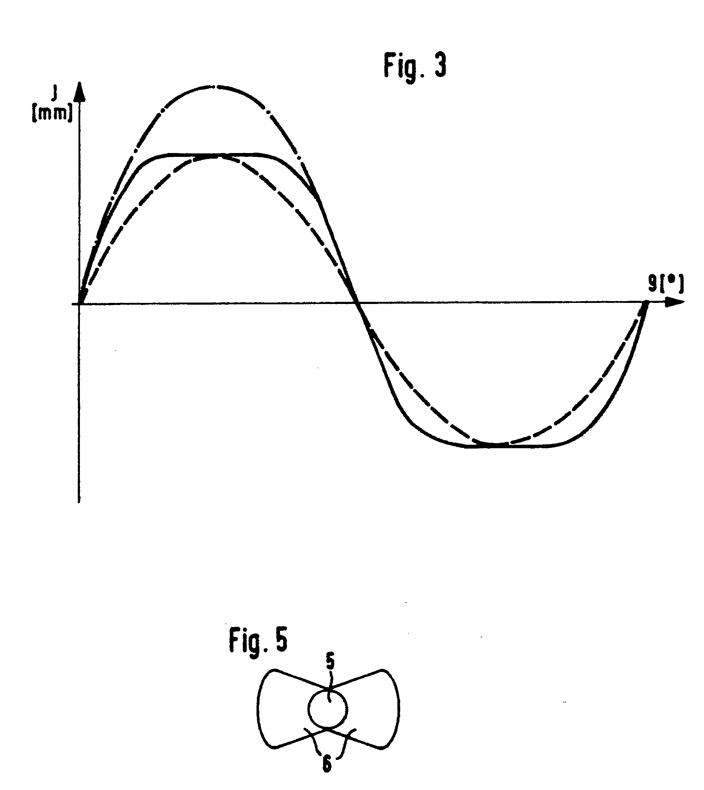

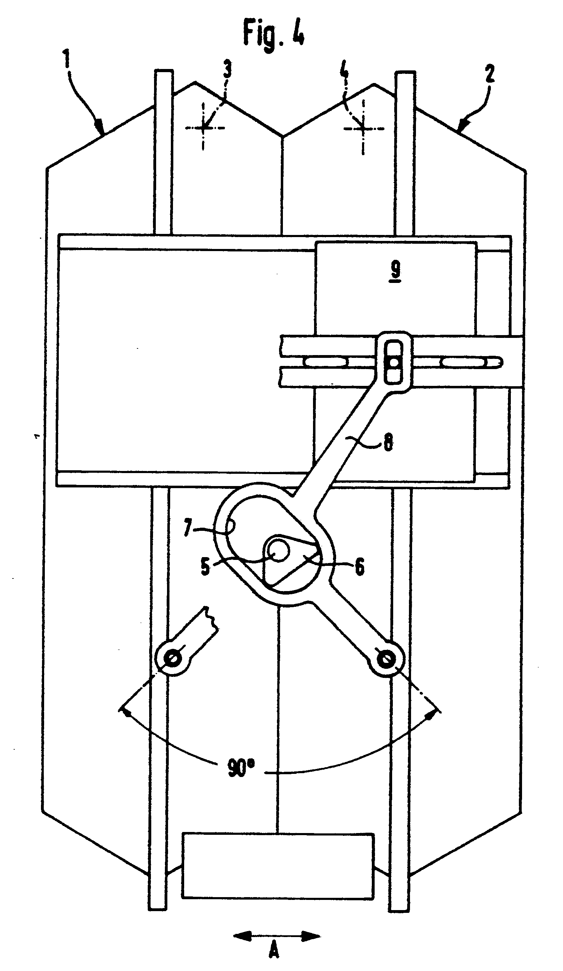

Figur 3 zeigt wiederum in gestrichelten Linien eine reine Sinuskurve. In durchgezogenen Linien ist die Öffnungscharakteristik der Schieber dargestellt. Es zeigt sich, daß im Bereich der Null-Linie die Steilheit verstärkt ist und dementsprechend eine Anpassung an die Bewegungscharakteristik gemäß Figur 2 erzielt wird. Wollte man diesen Effekt unter Beibehaltung der Sinusfunktion erzielen, so würde sich eine erhebliche Vergrößerung der Öffnung ergeben, siehe die strichpunktierte Linie in Fig. 3. Die Öffnungs-und Schließstellungen werden erfindungsgemäß sehr rasch erreicht, und die Schieber verharren relativ lange in diesen Stellungen. Die Kurvenscheibenantriebe sind als Rastgetriebe ausgebildet.

Nach Figur 4 besteht ein erfindungsgemäßer Balgengaszähler aus zwei Kammern 1 und 2, in denen sich nicht dargestellte bewegbare Wände phasenverschoben in Richtung des Doppelpfeils A hin und her bewegen. Diese Bewegung wird über schematisch angedeutete Wellen 3 und 4, über ein nicht dargestelltes Gestänge und letztlich über einen nicht dargestellten Exzenter auf eine gemeinsame Welle 5 übertragen.

Auf der gemeinsamen Welle 5 sitzen zwei Kurvenscheibenantriebe, von denen der Einfachheit halber nur einer vollständig dargestellt ist. Jeder Kurvenscheibenantrieb dient zum Betätigen eines zugehörigen Schiebers zum zyklischen Anschluß der zugehörigen Teilkammern an einen Gaseinlaß und einen Gasauslaß.

Der dargestellte Kurvenscheibenantrieb weist eine Kurvenscheibe 6 auf, die in eine langgestreckte Öffnung 7 des zugehörigen Gestänges eingreift. Die Kontur der Kurvenscheibe weicht derart von der Kreisform ab, daß ein Rastgetriebe gebildet wird. Das zugehörige Gestänge besteht aus einem Schwenkhebel 8, der seinen Schieber 9 in eine hin- und hergehende Bewegung versetzt, die ebenfalls in Richtung des Doppelpfeils A verläuft.

Die Schwenkhebel nach Figur 4 sind um 90° gegeneinander versetzt. Da die Bewegung der bewegbaren Wände und folglich auch die der Schieber 9 um 90° phasenverschoben erfolgen, ergibt sich, daß die beiden Kurvenscheiben um 180° versetzt auf der gemeinsamen Welle 5 angeordnet sind. Aus Figur 5 ist ersichtlich, daß sich die Schwenkhebel 8 nacheinander auf die Kurvenscheiben aufstecken lassen.

## Patentansprüche

1. Balgengaszähler mit zwei Kammern (1,2), die je eine bewegbare Wand enthalten, und einer gemeinsamen Welle (5), die zwei Exzentertriebe aufweist, von denen der eine mit den Gestängen der bewegbaren Wände (9) und der andere mit den Gestängen von zwei Schiebern verbunden ist, welche die von den bewegbaren Wänden abgeteilten vier Teilkammern zyklisch mit einem Gaseinlaß und einem Gasauslaß verbinden, wobei die beiden Exzentertriebe derart gegeneinander winkelversetzt sind, daß die Schieber beim Füllhub bereits schließen, bevor die zugehörige Wand die Endlage erreicht hat, dadurch gekennzeichnet, daß der mit den Schiebern (9) verbundene Exzentertrieb für jeden Schieber einen Kurvenscheibenantrieb aufweist, dessen auf der gemeinsamen Welle (5) sitzende und in eine langgestreckte Öffnung (7) des zugehörigen Gestänges eingreifende Kurvenscheibe (6) derart von der Kreisform abweicht, daß die Öffnungscharakteristik der Schieber im Bereich des Null-Linien-Durchgangs möglichst eng an die Bewegungscharakteristik der Wände angepaßt ist.

2. Balgengaszähler nach Anspruch 1, dadurch gekennzeichnet, daß die Kurvenscheibenantriebe als Rastgetriebe ausgebildet sind.

3. Balgengaszähler nach Anspruch 1 oder 2, dadurch gekennzeichnet, daß die langgestreckte Öffnung (7) jedes Kurvenscheibenantriebs in einem mit dem zugehörigen Schieber (9) verbundenen Schwenkhebel (8) vorgesehen ist.

4. Balgengaszähler nach Anspruch 3, dadurch gekennzeichnet, daß die Bewegung der Schieber (9), in die die Schwenkhebel (8) den Antrieb der Kurvenscheiben (6) umsetzen, parallel zur Bewegungsrichtung (A) der bewegbaren Wände verläuft.

5. Balgengaszähler nach Anspruch 3 oder 4, dadurch gekennzeichnet, daß die Schwenkhebel (8), bezogen auf den Symmetriepunkt der Kurvenscheiben (6), um 90° gegeneinander versetzt sind.

## Claims

1. A bellows-type gas meter comprising two compartments (1, 2), each having a movable wall as well as a shaft (5) common to said two compartments, said shaft having two eccentric cam assemblies, one of said eccentric cam assemblies being connected with the crank assemblies of said movable walls (9) and the other one of said eccentric cam assemblies being connected with the crank assemblies of two valves connecting in a cyclic mode the four chambers divided by said movable walls with a gas inlet and a gas outlet, the two eccentric cam assemblies being displaced relative to each other by an angle so that each valve during the filling cycle closes before the movable wall operating in conjunction herewith moves into its final position, characterized in that the eccentric cam assembly connected with said valves (9) is provided with a disk cam assembly for each such valve, said disk cam assembly being accommodated on a common shaft (5), the form of each such disk cam (6) engaging with a longitudinal opening (7) of the crank assembly for the valve operated thereby not being circular so that the valve opening characteristic near the point of zero travel of the movable wall is adapted to be as near as possible to the motion characteristic of said movable wall.

2. A bellows-type gas meter according to claim 1, characterized in that said disk cam assemblies are stop-motion linkages.

3. A bellows-type gas meter according to claim 1 or 2, characterized in that the longitudinal opening (7) of each disk cam assembly is provided in a pivoted lever device (8) connected with one of said two valves (9).

4. A bellows-type gas meter according to claim 3, characterized in that the motion of the valves (9) into which the motion of each such disk cam (6) is translated by said pivoted lever device (8) is parallel to the direction of motion of said movable walls.

5. A bellows-type gas meter according to claim 3 or 4, characterized in that said pivoted lever devices (8) are displaced at an angle of 90° to each other, relative to the symmetrical point of said disk cams (6).

**Revendications**

1. Compteur de gaz à membranes, comprenant deux chambres (1, 2) dont chacune est dotée d'une cloison mobile, et un arbre commun (5) muni de deux assemblages excentriques à came dont l'un est raccordé aux tringles des cloisons mobiles (9) et l'autre à celles de deux robinets, ces derniers connectant les quatre compartiments, dans lesquels les deux chambres sont divisées par les cloisons mobiles, cycliquement avec une entrée et une sortie de gaz, les deux assemblages excentriques à came étant décalés l'un par rapport à l'autre par un angle de telle manière que chacun des robinets pendant son cycle de remplissage se ferme déjà avant que la cloison assortie n'ait atteint sa position finale, caractérisé par le fait que l'assemblage excentrique raccordé aux robinets (9) est doté pour chacun des robinets d'un assemblage à disque à came, dont les disques à came (6), disposés sur l'arbre commun (5) et pénétrant dans une ouverture allongée (7) des tringles assorties, dévient de telle manière de la forme circulaire que la caractéristique d'ouverture des robinets dans la zone de déplacement zéro des cloisons est adaptée le plus possible à la caractéristique de mouvement des cloisons.

2. Compteur de gaz à membranes selon la revendication 1, caractérisé par le fait que les assemblages à disque à came sont conçus sous forme de mécanismes d'arrêt.

3. Compteur de gaz à membranes selon l'une quelconque des revendications 1 ou 2, caractérisé par le fait que l'ouverture allongée (7) dans laquelle pénètre chacun des assemblages à disque à came est prévue dans un levier pivotant (8) connecté avec le robinet (9) associé.

4. Compteur de gaz à membranes selon la revendication 3, caractérisé par le fait que le mouvement des robinets (9) par lequel le mouvement des disques à came (6) est transformé par les leviers pivotants (9) est pratiquement parallèle au sens du mouvement des cloisons mobiles.

5. Compteur de gaz à membranes selon l'une quelconque des revendications 3 ou 4, caractérisé par le fait que les leviers pivotants (8) sont décalés l'un par rapport à l'autre d'un angle de 90 degrés en relation avec l'axe de symétrie des disques à came (6).

# Fig. 1

# Fig. 2

## Fig. 3

## Fig. 5

# Fig. 4